# EUROPÄISCHE PATENTANMELDUNG

(11) **EP 2 610 482 A2**
(43) Veröffentlichungstag der Anmeldung: **03.07.2013**
(21) Anmeldenummer: 12007958.7
(22) Anmeldetag: 23.11.2012
(51) Int. Cl.: F03D 3/06

(54) **Profil zur Herstellung von Vertikalflügeln für vertikalaxiale Windkraftanlagen**

(30) Priorität: 29.12.2011 RU 2011154602
(71) Anmelder: Temerov, Andrey V., Krasnodarskij kraj. 353411 (RU)
(72) Erfinder: Temerov, Andrey V., Krasnodarskij kraj. 353411 (RU)
(74) Vertreter: Jeck, Anton

(57) **Zusammenfassung**

Die Erfindung betrifft ein Profil zur Herstellung von Vertikalflügeln für vertikalaxiale Windkraftanlagen mit einer vertikal abgewickelten Flügelfläche in Form einer axialsymmetrischen Figur mit gebogenen Enden. Damit der Nutzeffekt für vertikalaxiale Windkraftanlagen erhöht werden kann, wobei "Totzonen" hinsichtlich der Windrichtungen beseitigt, die Bauweise vereinfacht und die Windkraftkontakfläche vergrößert sind, sieht die Erfindung vor, dass die abgewickelte Flügelfläche als Rechleckplatte ausgebildet ist, wobei ein Ende der Rechteckplatte um einen Winkel α von 135 - 170° gebogen ist, dass die Fläche S₂ der gebogenen Platte ½ der Fläche S₁ einer zweiten den genannten Winkel α bildenden Platte beträgt und dass das zweite Ende der Rechteckplatte um einen Winkel β von 10 - 45° in entgegengesetzter Richtung gebogen ist, wobei die Fläche S₃ der gebogenen Platte gleich der Fläche S₁ der zweiten Platte ist, die den genannten Winkel β bildet.

## Beschreibung

Die Erfindung betrifft ein Profil zur Herstellung von Vertikalflügeln für vertikalaxiale Windkraftanlagen nach dem Oberbegriff des Anspruchs 1.

Die Erfindung ist in Windkraftanlagen einsetzbar und kann für Flügelkonstruktionen von Windrädem bei vertikalen Windgeneratoren sowie bei Mini-Wasserkraftanlagen als Bestandteil des Triebwerks verwendet werden.

Durch das Gebrauchsmuster RU 108504, Kl. F 03 D 3/06, 2011 ist ein einteiliger Flügel aus Verbundstoff ohne Metalleinschlüsse als Bestandteil einer Windkraftanlage bekannt. Der Flügel hat eine Arbeitsfläche und Flansche zur Befestigung an einem Tragwerk.

Die bekannte Konstruktion hat folgende Mängel: eine komplizierte Bauweise hinsichtlich der Fertigung, das Vorhandensein von "Totzonen" hinsichtlich der Windrichtung und eine kleine Windkontaktfläche.

Der nächstkommende Stand der Technik gegenüber dem neuen Profil zur Herstellung von Vertikalflügeln für vertikalaxiale Windkraftanlagen ist ein Hohlflügel eines Windrads, dessen Profil nur im mittleren Höhenteil des Flügels geschlossen ist. Die abgewickelte Flügelfläche sieht in ihrer Vertikalebene wie eine axialsymmetrische Figur aus. Eine ihrer Seiten liegt koaxial zur Welle und bildet die Grundlinie dieser Figur. Dabei überschreitet sie die Höhe dieser Figur. Dabei verengt sich die Figur mit der Entfernung von der Grundlinie (Gebrauchsmuster RU 10793, Kl. F 03 D 3/06, 1999).

Die Nachteile dieses bekannten Flügels sind sein niedriger Nutzeffekt wegen vorhandener "Totzonen" hinsichtlich der Windrichtungen sowie eine geringe Zuverlässigkeit der Konstruktion wegen des komplizierten Fertigungsablaufs.

Es ist Aufgabe der Efindung, den Nutzeffekt für vertikalaxiale Windkraftanlagen zu erhöhen, indem die «Totzonen» hinsichtlich der Windrichtungen beseitigt, die Bauweise vereinfacht und die Windkraftkontaktfläche vergrößert werden.

Die gestellte Aufgabe wird durch die Merkmale des Anspruchs 1 gelöst.

Das Profil zur Herstellung von Vertikalflügeln für vertikalaxiale Windkraftanlagen weist eine vertikal abgewickelte Flügelfläche in Form einer axialsymmetrischen Figur mit gekrümmten Enden auf. Dabei ist die abgewickelte Flügelfläche gemäß der Erfindung als Rechteckplatte ausgebildet. Ein Ende der Rechteckplatte ist um einen Winkel α von 135 - 170° gebogen. Dabei beträgt die Fläche der gebogenen Platte ½ einer zweiten den genannten Winkel α bildenden Platte. Das zweite Ende der Rechteckplatte ist um einen Winkel β von 10 - 45° in entgegengesetzter Richtung gebogen. Dabei ist die Fläche der gebogenen Platte gleich der Fläche der zweiten den genannten Winkel β bildenden Platte.

Dabei ist das Profil an seinen Stirnseiten mit Abdeckplatten verschlossen.

Darüber hinaus sind Querwände zwischen den Platten eingebaut, die die genannten Winkel α und β bilden.

Die Erfindung wird anhand von in den Zeichnungen dargestellten Ausführungsbeispielen näher erläutert. Es zeigen:

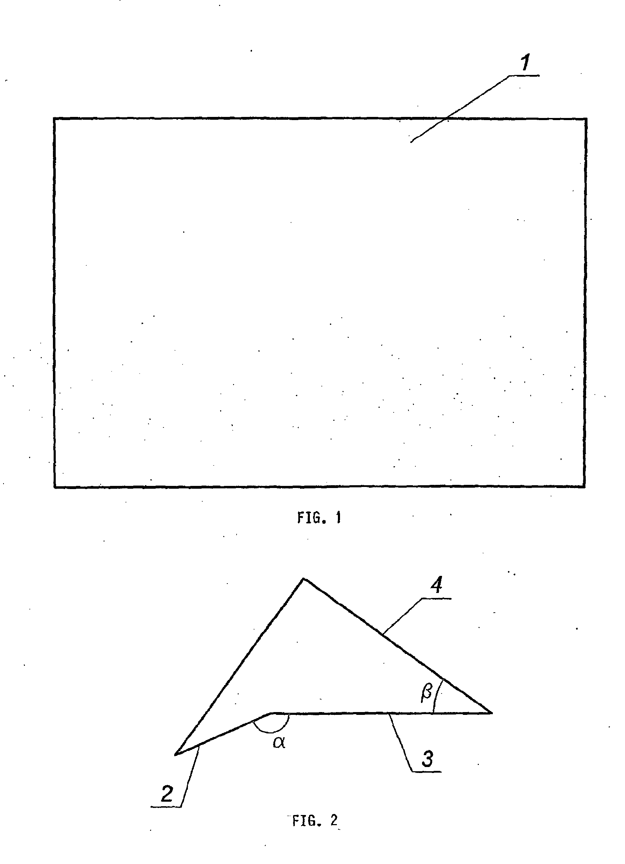

- Fig. 1: die abgewickelte Flügelfläche des erfindungsgemäßen Profils,
- Fig. 2: die Draufsicht,

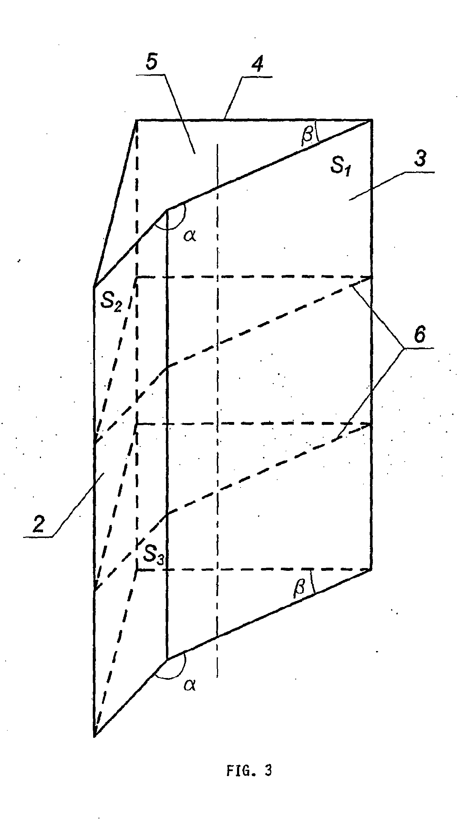

- Fig. 3: die Gesamtansicht des erfindungsgemäßen Profils und
- Fig. 4 bis 12: die schematischen Darstellungen der Stellung des aus dem erfindungsgemäßen Profil gefertigten Flügels während einer Beanspruchung durch eine Windströmung.

Das Profil zur Herstellung von Vertikalflügeln für vertikalaxiale Windkraftanlagen weist eine vertikal abgewickelte Flügelfläche auf, die als Rechteckplatte 1 ausgebildet ist. Ein Ende der Rechteckplatte 1 ist um einen Winkel von α = 135 -170° gebogen. Die Fläche S₂ der gebogenen Platte 2 ist gleich ½ der Fläche S₁ einer zweiten Platte 3, die den genannten Winkel α bilden. Das zweite Ende der Rechteckplatte 1 ist in die dem ersten Ende entgegengesetzte Richtung um einen Winkel von β = 10-45° gebogen. Die Fläche S₃ der gebogenen Platte 4 ist gleich der Fläche S₁ der zweiten den genannten Winkel β bildenden Platte 3.

Das heißt, das angemeldete Profil ist in Form von zwei zweiflächigen Winkeln ausgebildet, die eine gemeinsame Fläche (die Platte) aufweisen.

Die Stirnseiten des Profils sind mit Abdeckplatten 5 verschlossen. Querwände 6 sind jeweils zwischen den die genannten Winkel α und β bildenden Platten 2 und 3 sowie 3 und 4 eingebaut.

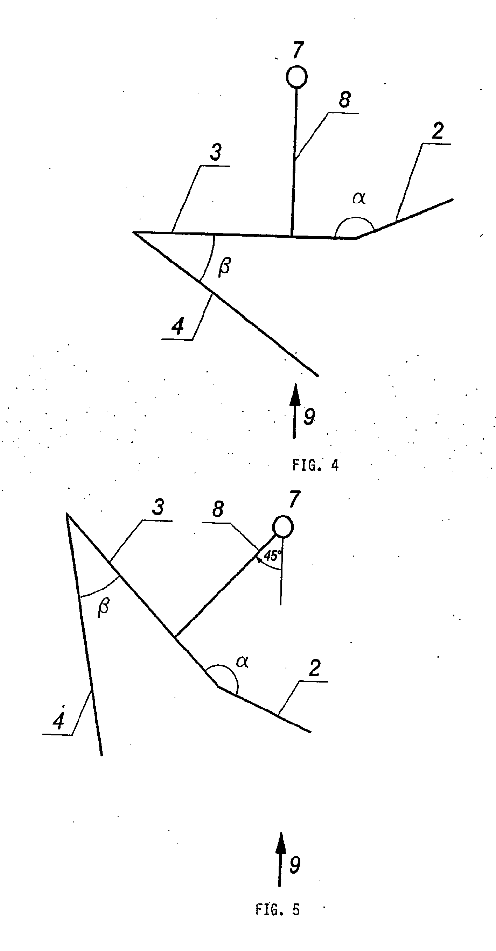

Der aus dem erfindungsgemäßen Profil gefertigte Flügel des Windrads weist eine Drehachse 7 auf. Ein Arm 8 verbindet den Flügel mit der Drehachse 7. Die Richtung der Windströmung ist in den Fig. 4 bis 12 mit dem Pfeil 9 gekennzeichnet.

Der aus dem erfindungsgemäßen Profil hergestellte Flügel funktioniert wie folgt.

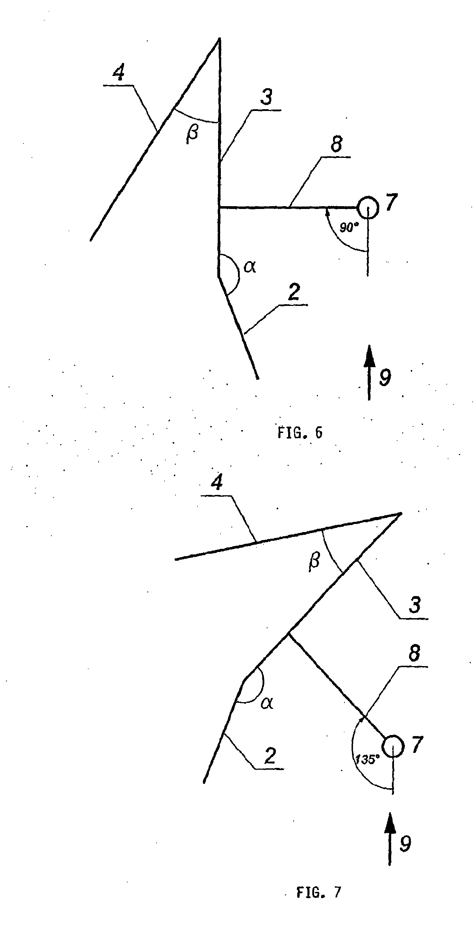

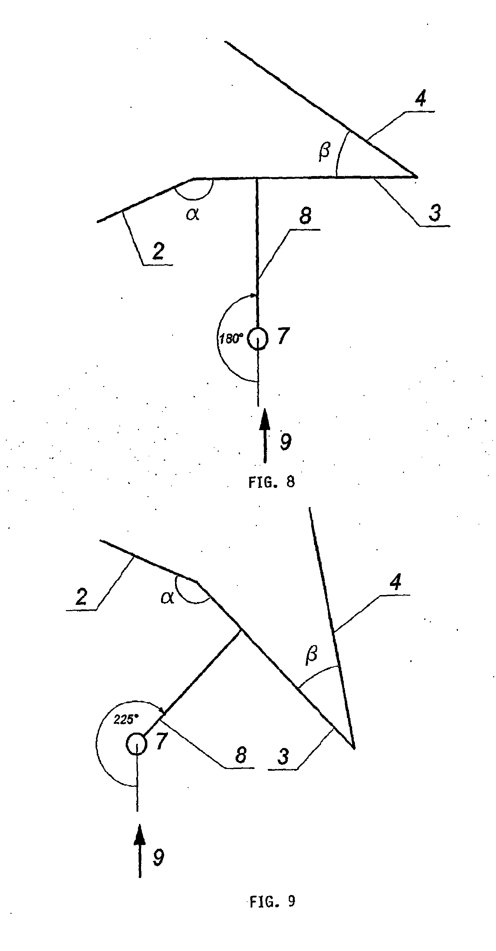

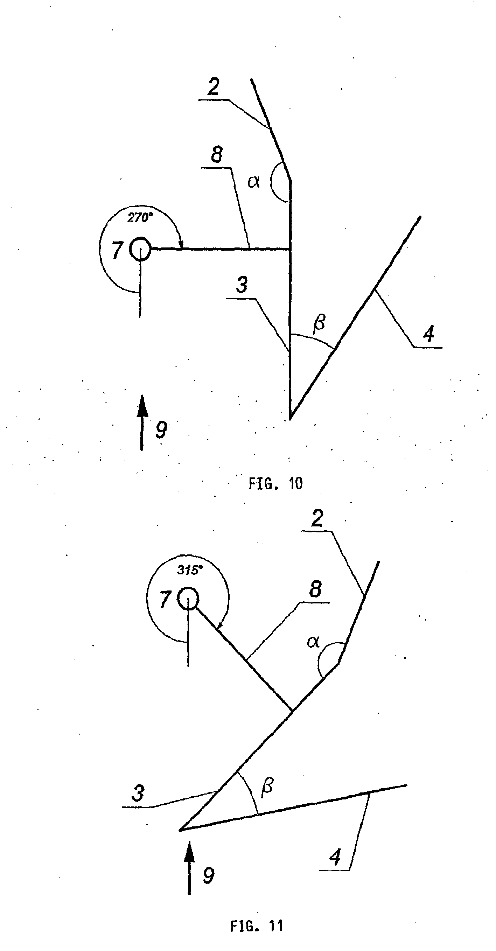

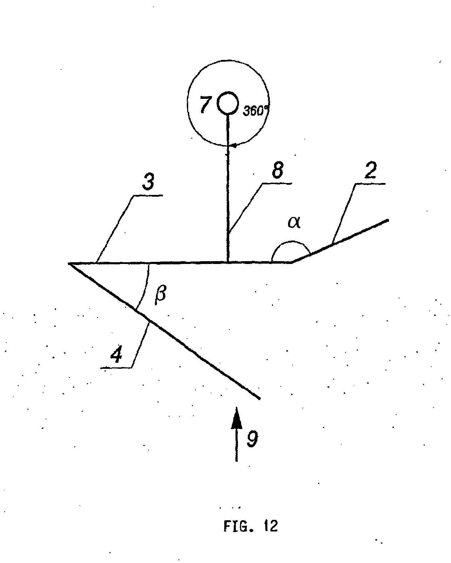

Die Anfangsbewegung erfolgt durch Einwirkung der Windströmung auf das neue Profil. So fällt die Richtung der Windströmung 9 in der Grundstellung des Flügels zum Beispiel mit der Stellung von dem Arm 8 zusammen. Dabei wirkt die Windstärke auf die Flächen S₁, S₂ und S₃ der jeweiligen Platten 3, 2 und 4 ein und versetzt den Flügel (Fig. 4) in im Uhrzeigersinn verlaufende Bewegung. Dabei wird der Winkel zwischen der Richtung der Windströmung 9 und dem Arm 8 vergrößert. Die Windströmung 9 wirkt auf die Flächen S₁, S₂ und S₃ der jeweiligen Platten 3, 2 und 4 ein. Der Winkel zwischen der Richtung der Windströmung 9 und dem Arm 8 beträgt 45° (Fig. 5). Während der Bewegung des Flügels erreicht der Winkel zwischen der Richtung der Windströmung 9 und dem Arm 8 90°. Dabei wirkt die Windströmung 9 auf die Flächen S₁, S₂ und S₃ der jeweiligen Platten 3, 2 und 4 ein (Fig. 6). Bei einem Winkel von 135° zwischen der Richtung der Windströmung 9 und dem Arm 8 wirkt die Windströmung 9 auf die Flächen S₁ und S₂ der jeweiligen Platten 3 und 2 (Fig. 7) ein. Bei einem Winkel bis zu 180° zwischen der Richtung der Windströmung 9 und dem Arm 8 wirkt die Windströmung 9 auf die Flächen S₁ und S₂ der jeweiligen Platten 3 und 2 (Fig. 8) ein. Bei einem Winkel bis zu 225° zwischen der Richtung der Windströmung 9 und dem Arm 8 wirkt die Windströmung 9 auf die Flächen S₁ und S₂ der jeweiligen Platten 3 und 2 (Fig. 9) ein. Bei einem Winkel bis zu 270° zwischen der Richtung der Windströmung 9 und dem Arm 8 wirkt die Windströmung 9 auf die Flächen S₂ und S₃ der jeweiligen Platten 2 und 4 (Fig. 10) ein. Bei einem Winkel bis zu 315° zwischen der Richtung der Windströmung 9 und dem Arm 8 wirkt die Windströmung 9 auf die Flächen S₂ und S₃ der jeweiligen Platten 2 und 4 (Fig. 11) ein. Bei einem Winkel bis zu 360° zwischen der Richtung der Windströmung 9 und dem Arm 8 wirkt die Windströmung 9 auf die Flächen S₁, S₂ und S₃ der jeweiligen Platten 3, 2 und 4 (Fig. 12) ein.

Das Vorhandensein von Querwänden 6 vergrößert die Fläche, welche im Kontakt mit der Windströmung steht. Darüber hinaus wird dadurch die Baufestigkeit erhöht und ihre zuverlässige Funktion sichergestellt.

Aus den obigen Ausführungen folgt, dass, unabhängig von der Stellung des aus dem Profil gefertigten Flügels zur Richtung der Windströmung, der Flügel ununterbrochen durch die Windströmung beansprucht wird. Diese Windstärke bringt den Flügel jederzeit in Bewegung. Die Konstruktion ermöglicht es, die Bildung von «Totzonen» zu vermeiden, denn es gibt keine solche Stellung des Flügels, in der er durch die Windströmungsstärke nicht beansprucht wäre. Eine große Fläche, die im Kontakt mit der Windströmung steht, ermöglicht es, den Windgenerator auch bei schwächerer Windströmung in Bewegung zu setzen und die Leistung des Windgenerators bei den gleichen Abmessungen des Vertikalflügels wie die des Prototyps zu erhöhen.

## Patentansprüche

1. Profil zur Herstellung von Vertikalflügeln der vertikalaxialen Windkraftanlagen mit vertikaler abgewickelter Flügelfläche in Form von einem axialsymmetrischen Figur mit gekrümmten Enden,
**dadurch gekennzeichnet,**
**dass** die abgewickelte Flügelfläche als eine Rechteckplatte ausgebildet ist; dabei ist ein Ende der Rechteckplatte um einen Winkel von 135-170° gekrümmt, und die Fläche der gekrümmten Platte beträgt ½ der Fläche der zweiten den genannten Winkel bildenden Platte, und das zweite Ende der Rechteckplatte ist um einen Winkel von 10-45° in die entgegengesetzte Richtung gekrümmt, dabei ist die Fläche der gekrümmtem Platte gleich die Fläche der zweiten den genannten Winkel bildenden Platte.

2. Profil nach Anspruch 1,
**dadurch gekennzeichnet,**
**dass** es an seinen Stirnseiten mit Abdeckplatten verschlossen ist.

3. Profil nach Anspruch 1,
**dadurch gekennzeichnet,**
**dass** zwischen den Platten, die die genannten Winkel bilden, Querwände eingebaut sind.
